# EUROPÄISCHE PATENTSCHRIFT

(11) **EP 0 907 400 B1**
(45) Veröffentlichungstag und Bekanntmachung des Hinweises auf die Patenterteilung: **31.01.2001**
(21) Anmeldenummer: 97920658.8
(22) Anmeldetag: 11.04.1997
(51) Int. Cl.: B01D 53/26, C07C 7/11, C07C 9/04, F25B 9/04

(54) **VERFAHREN UND VORRICHTUNG ZUR TROCKNUNG VON GAS, INSBESONDERE ERDGAS**
PROCESS AND DEVICE FOR DRYING GAS, ESPECIALLY NATURAL GAS
PROCEDE ET DISPOSITIF DE SECHAGE DE GAZ, NOTAMMENT DE GAZ NATUREL

(30) Priorität: 31.05.1996 DE 19621908
(43) Veröffentlichungstag der Anmeldung: 14.04.1999
(73) Patentinhaber: Filtan Filter-Anlagenbau GmbH, D-63505 Langenselbold (DE); RUHRGAS AKTIENGESELLSCHAFT, 45138 Essen (DE)
(72) Erfinder: WÜNNENBERG, Wolfgang, D-45239 Essen (DE); JARAUSCH, Holger, D-45259 Essen (DE); JANSEN, Ferdinand, D-45770 Marl (DE); WESSING, Werner, D-46325 Borken (DE); LOREY, Manfred, D-63505 Langenselbold (DE); THOMAS, Keith, D-35435 Wettenberg 1 (DE)
(74) Vertreter: Fuchs Mehler Weiss & Fritzsche
(86) Internationale Anmeldenummer: EP9701819
(87) Internationale Veröffentlichungsnummer: WO9746304

(56) Entgegenhaltungen:
- DE-A- 2 850 019
- US-A- 4 279 628

## Beschreibung

Die Erfindung betrifft ein Verfahren zur Trocknung von Gas, insbesondere Erdgas, gemäß dem Oberbegriff von Patentanspruch 1 sowie eine entsprechende Vorrichtung gemäß dem Oberbegriff des Patentanspruchs 15.

Erdgas nimmt aufgrund der Untertage vorliegenden Bedingungen Wasser auf, das beim Ausspeichern in freier und dampfförmiger Form mit dem Gas in die oberirdischen Anlagen gelangt. Um während des Fördervorgangs im nachgeschalteten Rohrleitungssystem Schäden infolge von Korrosion oder durch Hydratbildung zu verhindern, wird dem Erdgas Wasser bis zu einem Wassertaupunkt unterhalb der zu erwartenden Umgebungsbedingungen von z.B. -8°C bei Drücken von ca. 70 bar entzogen, was einem Wassergehalt von ca. 74 mg/m³ im Sättigungszustand entspricht. Das freie Wasser und die mitgerissenen Feststoffe aus der Sonde werden in vorgeschalteten Abscheidern entfernt. Zur Entfernung von gelöstem Wasser aus dem Erdgas gibt es mehrere Methoden. Zu den gegenwärtig wirtschaftlich angewandten Verfahren zählen:
- Absorption (z.B. über Glykol)
- Adsorption (z.B. über Silicagel oder Molekularsiebe)
- Kondensation durch Tiefkühlung.

Absorptionsverfahren werden beispielsweise in SI Engineering Data Book aus dem Jahre 1980 der Gas Processors Suppliers Association beschrieben. Danach wird in die Kolonne von unten das feuchte Erdgas eingeleitet, das durch die Kolonne nach oben aufsteigt. Im Gegenstrom wird Glykol von oben zugeführt. das am unteren Ende der Kolonne als belastetes Glykol abgeführt wird. Der Nachteil dieses Verfahrens liegt darin, daß relativ voluminöse Anlagen erforderlich sind, und daß hochreines Glykol weit über der thermodynamischen Mindestmenge im Umlauf eingesetzt werden muß. Außerdem nimmt der Wirkungsgrad von Absorbern bei einem Anfall von freiem Wasser und Kohlenwasserstoffen stark ab.

Aus der US-4,279,628 ist ein Verfahren bekannt, bei dem Triethylenglykol einem Gasstrom mit hoher Geschwindigkeit in einer Mischzone zugesetzt wird, wo durch Turbulenzen ein Vermischen des Trocknungsmittels mit dem flüssigkeitsbeladenen Gas stattfindet. In einem angeschlossenen Zentrifugalseparator wird das Gas von der Flüssigkeit und dem Trocknungsmittel getrennt.

Die Trocknung durch feste Trocknungsmittel (Adsorptionsverfahren) ist ebenfalls ein weit verbreitetes Verfahren, weil es von allen bekannten Trocknungsverfahren das wirksamste ist. Es lassen sich je nach Trocknungsmittel Taupunktsenkungen von 50 - 75°C erreichen. Als großer Nachteil erweist sich jedoch, daß nur im intermittierenden Betrieb gefahren werden kann, da aus der gesättigten Trocknersubstanz die aufgenommene Flüssigkeit in einem gesonderten Verfahren wieder entfernt werden muß. Da dieses zur Aufrechterhaltung eines kontinuierlichen Betriebes eine doppelte apparative Ausrüstung erfordert, sowie eine zusätzliche Infrastruktur, um die Feuchte zu entfernen, sind die Investitionskosten bei den Adsorptionstrocknungsanlagen sehr hoch.

Bei der Trocknung durch Expansionskühlung wird die Gastemperatur unter den ursprünglichen Taupunkt abgesenkt. Das Prinzip der Expansionskühlung basiert auf dem Joule-Thomson-Effekt, wonach sich reale Gase bei Drosselung abkühlen und praktisch kein Wärmeaustausch zwischen dem Gas und seiner Umgebung stattfindet. Der Drosselvorgang verläuft daher nahezu adiabatisch. Die Anwendung der Tieftemperaturabscheidung setzt immer ein Druckgefälle zwischen Bohrlochkopf und Abgangsleitung voraus. Dieses Druckgefälle muß für die Taupunktsenkung ausgenutzt werden.

Das von der Sonde kommende Hochdruckgas wird in einer Leitung durch den unteren Teil eines Tieftemperaturabscheiders geführt, um den hier entstehenden Flüssigkeitssumpf aufzuwärmen bzw. sogar entstandene Hydrate zu schmelzen.

Wenn die Fließtemperatur hierzu nicht ausreicht, kann ein Durchlauferhitzer als zusätzliche Wärmequelle vorgeschaltet werden. Es muß aber darauf geachtet werden, daß die Sumpftemperatur nur soweit erhöht wird, daß die Kohlenwasserstoffe flüssig bleiben und keine Hydrate entstehen. Jede weitere Aufwärmung des Gases bringt eine Verschlechterung des Wirkungsgrades der Anlage, nämlich einen ungünstigeren Taupunkt, mit sich.

Das teilweise gekühlte Gas strömt nun in einen Freiwasserabscheider, wo ihm freies Wasser und Kohlenwasserstoffe entzogen werden. In einem nachgeschalteten Wärmetauscher wird das Gas bis wenig über den Hydratbildungspunkt abgekühlt. Das Gas wird im Tieftemperaturabscheider annähernd auf den Abgangsdruck entspannt. Durch die hierbei entstehende Expansionskühlung werden die verflüssigbaren Kohlenwasserstoffe und der Wasserdampf kondensiert.

Am Fuß des Separators werden die ausgeschiedenen Flüssigkeiten über ein niveaugesteuertes Regelventil ausgeschleust und können in besonderen Behältern nach Wasser und Kohlenwasserstoffe getrennt gestapelt werden.

Das Tieftemperaturabscheideverfahren stellt eine einfache Trocknungsmethode dar, mit der man außer einer guten Entwässerung vor allem eine hohe Ausbeute an Kohlenwasserstoffen erzielt.

Eine Alternative hierzu stellt das Wirbelrohr zur Erdgastrocknung dar, das neben dem Joule-Thomson-Effekt zusätzlich den Hilsch-Effekt zur Erdgastrocknung ausnutzt. Der Hilsch-Effekt tritt durch die tangentiale Einführung des Gasstromes ins Wirbelrohr auf, wodurch sich eine Trennung der Flüssigkeitsphase von der Gasphase einstellt. Gleichzeitig werden die durch den Hilsch-Effekt bewirkten Temperaturveränderungen im Wirbelfeld (die Temperatur verringert sich von der Wand zum Rohrzentrum hin) ausgenutzt, um den Gasstrom zusätzlich zu kühlen und kondensierende Gaskomponenten anzutrennen. Dieser zusätzliche Effekt der Temperaturabsenkung im Wirbelrohr wird zur Kondensation von Wasser und Kohlenwasserstoffen genutzt, wobei sich hierdurch ein Wassertaupunkt entsprechend einer Joule-Thomson-Expansion einstellt. Die freigesetzte Flüssigkeit wird über den Kondensatablauf abgeführt. Der kompakte Trocknungsapparat kann dort eingesetzt werden, so systembedingte Druckdifferenzen, wie z.B. an einem Kavernenspeicher vorliegen.

Solche Wirbelrohre werden beispielsweise in DE-OS 28 50 019 und DE-OS 28 50 020 beschrieben, wo auch die Eignung solcher Wirbelrohre für die Erdgastrocknung erwähnt wird. Das Wirbelrohr besteht aus einem Doppelmantelrohr, wobei im Innenmantel Ableitöffnungen für die am Innenmantel abgeschiedene Flüssigkeit vorgesehen ist, die in einen Sammelbehälter abgeführt wird.

Auch in "Gas Dehydration, Process Selection Guidelines" der BP Exploration Limited Juni 94 wird neben den üblicherweise eingesetzten Absorptions- und Adsorptionsverfahren der Einsatz von Wirbelrohren (sogenannte " Vortex Tubes") für die Erdgastrocknung empfohlen.

Bisher sind Wirbelrohre allerdings nur versuchsweise eingesetzt worden. Aufgrund der Vorteile der Wirbelrohre, die darin zu sehen sind, daß keine beweglichen Bauteile und nur geringe Wartungskosten anfallen, ist es wünschenswert, diese Technologie hinsichtlich ihrer Effizienz weiter zu verbessern.

Aufgabe der Erfindung ist es daher, ein Verfahren und eine Vorrichtung zur Trocknung von Gas, insbesondere Erdgas auf der Basis der Wirbelrohrtechnik bereitzustellen, bei dem der Wassergehalt im Falle des Erdgases bei gleichzeitiger Abscheidung von Kohlenwasserstoffen auf einfache Weise auf eine typische Trockenspezifikation gesenkt werden kann (z.B. unter 70 mg/m³).

Die Aufgabe wird mit einem Verfahren mit den Merkmalen des Patentanspruchs 1 und mit einer Vorrichtung gemäß Patentanspruch 15 gelöst. Vorteilhafte Ausgestaltungen werden in den Unteransprüchen beschrieben.

Die Erfindung geht von der Erkenntnis aus, daß im Wirbelrohr aufgrund der dort auftretenden Turbulenzen und Zentrifugalbeschleunigungen eine weitaus bessere Vermischung des Trocknungsmittels mit dem Gas erfolgt, als dies bei den bekannten Absorptionsverfahren nach dem Stand der Technik der Fall ist. Daraus ergeben sich zwei Vorteile, die darin bestehen, daß weitaus weniger Trocknungsmittel bei gleicher Gasmenge als nach dem Stand der Technik erforderlich ist und daß ferner mit weitaus unreinerem Trocknungsmittel bei gleichgutem Trocknungsergebnis gearbeitet werden kann. Hierbei hat sich gezeigt, daß je höher das Druckverhältnis P1 zu P2 ist, wobei P1 der Eingangsdruck und P2 der Ausgangsdruck des Wirbelrohres ist, der Trocknungseffekt zunehmend besser wird, so daß ein Wassergehalt von deutlich unter 70 mg/m³ erreicht werden kann. Vorzugsweise gilt für das Druckverhältnis P1 zu P2 > 1,05, wobei vorteilhafterweise ein Druckverhältnis von 1,3 bis 2,5 gewählt wird.

Die Menge an eingesetzten Trocknungsmittel beträgt vorzugsweise < 4 g/m³ Gas. wobei die jeweilige Menge auch vom Reinheitsgrad abhängt. Die Einsatzmengen liegen im Schnitt unter der Hälfte der üblich eingesetzen Menge für Absortionsverfahren. Die Reinheit des Trocknungsmittels richtet sich nach den jeweiligen Druckverhältnissen und der Eingangstemperatur des Gases und wird entsprechend automatisch zugemischt.

Als Trocknungsmittel wird das aus dem Stand der Technik bekannte Glykol, insbesondere Triethylenglykol, oder Methanol verwendet, das sich auch beim erfindungsgemäßen Verfahren bewährt hat. Vorzugsweise wird ein Trocknungsmittel mit einem Reinheitsgrad von 85 bis 90 % verwendet. Je größer das Druckverhältnis P1/P2 ist, desto unreiner kann das Trocknungsmittel sein. Bei Druckverhältnissen < 1,3 sollte der Reinheitsgrad bei 99% liegen.

Wenn gemäß einer Ausführungsform das Trocknungsmittel vor dem Behandlungsvorgang bereits dem Gas zugemischt wird, so kann dieses Trocknungsmittel unreiner sein als das Trocknungsmittel, das während des Behandlungsvorgangs zugegeben wird.

Wenn weniger und unreineres Trocknungsmittel eingesetzt werden kann, so kann auch die Trocknungsmittelaufbereitungsanlage wesentlich kleiner ausgelegt werden. Ferner muß bei der Regeneration des Trocknungsmittels nicht mit den hohen Temperaturen gearbeitet werden, die erforderlich sind, um hochreines Trocknungsmittel zu erzeugen. Die bei hohen Temperaturen anfallenden Crack-Produkte werden minimiert. Da die Menge an mitabsorbierten Kohlenwasserstoffen in Abhängigkeit der Glykolumlaufmenge reduziert wird, vermindert sich damit die umweltbelastende Immission.

Ferner hat sich herausgestellt, daß der überwiegende Teil des mit Wasser belasteten Trocknungsmittels zusammen mit den abgeschiedenen Kohlenwasserstoffen, die zum Schäumen der Flüssigkeitsphase neigen, sich in Tropfenform bzw. Nebelform im Warmgasstrom befinden, der somit einem Gasflüssigkeitsabscheider zugeführt werden kann, wo die endgültige Abscheidung der Flüssigkeit, zum Teil als Schaum, erfolgt. Je nach Qualität des zu trocknendes Gases werden die Anteile im Kaltgas- und Warmgasstrom eingestellt, wobei der Anteil des Kaltgasstromes zwischen 0 % und 80 % liegen kann. Da auch Flüssigkeitsanteile im Kaltgasstrom vorhanden sein können, wird der Kaltgas- und/oder Warmgasstrom dem Gas/Flüssigkeitsabscheider zugeführt.

Das feuchte Gas wird vor dem Behandlungsvorgang vorzugsweise vorgekühlt, damit das Gas bereits mit einer niedrigen Temperatur dem Behandlungsvorgang unterworfen werden kann, wodurch die Kondensation der Flüssigkeit und damit der Trocknungseffekt verbessert wird. Vorzugsweise wird ein Teil des getrockneten Gases zur Vorkühlung des feuchten Gases verwendet.

Da sich durch die Kühlung des Gases Hydrate bilden können, die zu einem Verstopfen von Leitungen und Ventilen führen, ist es zweckmäßig, bereits frühzeitig in die Zuführleitung ein Inhibierungsmittel einzuleiten. Da hierfür ebenfalls beispielsweise Glykol verwendet wird, tritt bereits vor dem eigentlichen Behandlungsvorgang eine entsprechende Vermischung des Trocknungsmittels mit dem Gas auf. Vorzugsweise wird das Trocknungsmittel bereits während der Vorkühlung zugegeben.

Damit das getrocknete Gas nicht mit zu tiefer Temperatur in die Pipeline bzw. in das Rohrleitungssystem zur Weiterverarbeitung eingeleitet wird, kann zuvor eine Erwärmung des trockenen Gases erfolgen.

Der Druck des Gases kann vor dem Behandlungsvorgang bereits reduziert werden, was sich je nach Auslegung der entsprechenden Anlage zur Durchführung dieses Verfahrens richtet.

Der Behandlungsvorgang kann auch mehrmals, vorzugsweise zweimal hintereinander durchgeführt werden.

Die Vorrichtung ist dadurch gekennzeichnet, daß das Wirbelrohr längs seines Zylindermantels geschlossen ist, daß mindestens eine Einrichtung für die Zuführung von Trocknungsmitteln vorgesehen ist, die an die Zuführleitung und/oder an den Wirbelraum des Wirbelrohres angeschlossen ist und daß die Kaltgas- und/oder Warmgasauslaßleitung an einen Gasflüssigkeitsabscheider für die Abtrennung der flüssigen Phase angeschlossen ist. Unter der flüssigen Phase wird vorzugsweise das mit Wasser belastete Trocknungsmittel sowie Kohlenwasserstoffe verstanden.

Es hat sich überraschend gezeigt, daß sich keine Flüssigkeit an der Innenwand des Wirbelrohres abscheidet und daß sich der größte Teil als Flüssigkeitstropfen im Warmgasstrom ausbildet. Insofern spielt die bekannte Abscheidung von Flüssigkeit an der Rohrwandung für die Gastrocknung keine Rolle. Die Flüssigkeit wird vorwiegend vom Warmgasstrom in Form von Flüssigkeitstropfen mitgerissen, die dann in einem nachgeschalteten Gasflüssigkeitsabscheider abgetrennt werden müssen. Die wirksamste Abscheidung im Gasflüssigkeitsabscheider tritt dann auf, wenn weniger als 7 mg Trocknungsmittel pro m³ Gas mitgerissen wird.

Es ist somit kein aufwendiges Doppel-Wirbelrohr mit Ableitöffnungen im Mantel notwendig, sondern es reicht ein geschlossenes Rohr vollkommen aus, dem lediglich ein spezieller Flüssigkeitsabscheider nachgeordnet werden muß, wie er beispielsweise in DE-OS 38 21 101 beschrieben ist.

Das Wirbelrohr dient bei der Gastrocknung unter Einsatz von Trocknungsmitteln der innigen Vermischung des Trocknungsmittels mit dem Gas und der verbesserten Diffusion der Gas/Flüssigkeitsphase im Zentrifugalfeld sowie der Bildung von Flüssigkeitstropfen, die erst hinter dem Wirbelrohr aus dem Gas entfernt werden. Der Vorteil besteht in der wesentlich einfacheren Konstruktion des Wirbelrohres und der größeren Effektivität im Vergleich zu den sogenannten Vortex-Wirbelrohren, die nur für die Abscheidung von Kohlenwasserstoffen eingesetzt werden.

Es hat sich ferner gezeigt, daß die Wirbelrohrabmessungen einen großen Einfluß auf den Trocknungseffekt haben. Wenn der Querschnitt des Wirbelrohres zu klein ist, wird keine ausreichend große Tropfengröße erreicht. Wenn andererseits der Durchmesser zu groß ist, entsteht keine gute Vermischung von Trocknungsmittel und Erdgas, so daß der Trocknungseffekt unzureichend ist. Die bevorzugten Durchmesser eines erfindungsgemäßen Wirbelrohres liegen bei 0,025 m bis 0,3 m.

Das Trocknungsmittel wird vorzugsweise in der Mitte des Wirbelrohres eingedüst. Da die Strömungsform in Wirbelrohr sehr turbulent ist, kann auf eine Vermischung über Sprühdüsen in der Regel verzichtet werden. Die in der Zuführleitung vorgesehene Dosierpumpe dosiert immer mit einem Druck ein, der über dem radialen Druck im Wirbelrohr liegt.

Vorzugsweise ist dem Wirbelrohr ein Wärmetauscher zur Vorkühlung des Gases vorgeschaltet. In diesem Fall ist vorzugsweise auch der Wärmetauscher an die Zuführeinrichtung für das Trocknungsmittel angeschlossen.

Um bereits kondensierte Anteile aus dem feuchten Gas abzutrennen, ist dem Wirbelrohr vorzugsweise ein Freiwasserabscheider vorgeschaltet.

Um das Wirbelrohr nicht dem vollen anliegenden Erdgasdruck auszusetzen, kann dem Wirbelrohr ein Joule-Thomson-Ventil vorgeschaltet sein oder es können auch zwei Wirbelrohre hintereinander angeordnet werden.

Die Vorteile der erfindungsgemäßen Vorrichtung lassen sich wie folgt zusammenfassen:
- keine beweglichen Teile bzw. Verschleißteile
- Lastbereich ist zwischen 10 % und 100 % einstellbar
- kurze Anfahrphasen
- kleinere Regeneration bei angepaßter Trockenmittelumlaufmenge
- niedrigere Betriebs- und Wartungskosten
- Modulbauweise möglich.

Die Erfindung wird nachfolgend am Beispiel der Erdgastrocknung näher erläutert.

Es zeigen:
- Fig. 1: die schematische Darstellung eines Wirbelrohrs während der Erdgastrocknung und
- Fign. 2 - 4: Schaltpläne der Vorrichtung gemäß drei verschiedener Ausführungsformen.

In der Fig. list ein Wizhelrohr 10 dargestellt, das in einem Gehäuse 15 einen geschlossenen Zylindermantel 13 aufweist, in den über die Einlaßleitung 5 feuchtes Erdgas tangential eingedüst wird. Dort erreicht das flüssigkeitsbeladene Erdgas in Abhängigkeit vom Verhältnis zwischen Eingangs- und Ausgangsdruck fast schon Schallgeschwindigkeit. Der eintretende Strahl bildet dabei einen starken Längswirbel 16 mit hohen Zentrifugalkräften, die bis zu 1 Million mal größer sein können als die Erdbeschleunigung. Bei der Beschleunigung auf Schallgeschwindigkeit expandiert das Gas und kühlt sich aufgrund des Joule-Thomson-Effektes ab. Durch die Kühlung des Gases sinkt der Sättigungsdruck des im Gas vorhandenen Wassers, das schon während der Expansion zu kondensieren beginnt, ab. Sobald die feinverteilten Flüssigkeitströpfchen in das Zentrifugalfeld des Wirbels eintreten, werden sie aufgrund ihrer verglichen mit dem Gas erheblich höheren Dichte durch die Fliehkraft in Richtung Zylindermantel 13 transportiert.

Im Wirbelfeld stellt sich ein starker Druckanstieg in radialer Richtung ein. In diesem Strömungsfeld wandern sogenannte Turbulenzballen auf und ab. Bewegt sich hierbei ein Fluidteilchen gegen den hohen Druck nach außen, kommt es zu einer Kompression bei gleichzeitigem Temperaturanstieg. In Gegenrichtung stellt sich eine Expansion mit einer Temperaturabsenkung unterhalb der lokalen Umgebungstemperatur ein. Unter diesen Strömungsverhältnissen stellt sich ein stabiles Temperaturgefälle mit einer tiefen Temperatur auf der Innenseite des Wirbelfeldes und einer hohen Temperatur zur Rohraußenwand hin ein. Am Wirbelrohrende teilt sich nach Voreinstellung des Stellkegels 14 der Gesamtvolumenstrom in einen warmen Gasstrom 19 und einen kalten Gasstrom 17 auf. Der Warmgasstrom 19 wird dabei im oberen Bereich zur Rohraußenwand hin, d.h. im höheren Temperaturbereich, durch die Warmgasauslaßleitung 12 abgezogen. Im unteren Wirbelfeld wird zur Rohrachse hin der Kaltgasstrom 17 durch die Kaltgasauslaßleitung 11 abgeführt. Hierbei stellt sich eine höhere Kaltgasmischtemperatur als die tiefste Temperatur auf der Innenseite des äußeren Wirbelfeldes ein. Nach der Umlenkung kommt es somit zu einem Temperaturausgleich. Der Kaltgasstrom wird vergleichbar wie in einem Wärmetauscher unter weiterer Kondensation von Wasser weiter abgekühlt und erreicht dabei eine tiefere Tempertaur (Hilsch-Effekt) als sich allein durch den Joule-Thomson-Effekt einstellen kann. Hierbei werden die sich vorwiegend im Warmgasstrom 19 ausbildenden Flüssigkeitstropfen 18 mitgerissen und ebenfalls durch die Warmgasauslaßleitung 12 aus dem Wirbelrohr 10 entfernt.

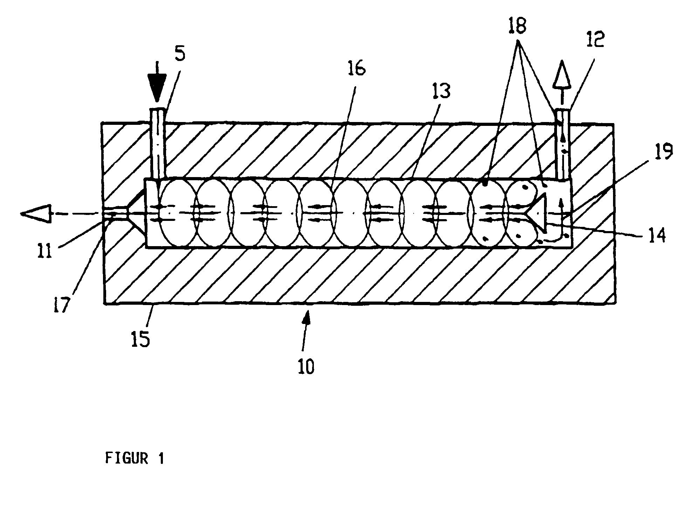

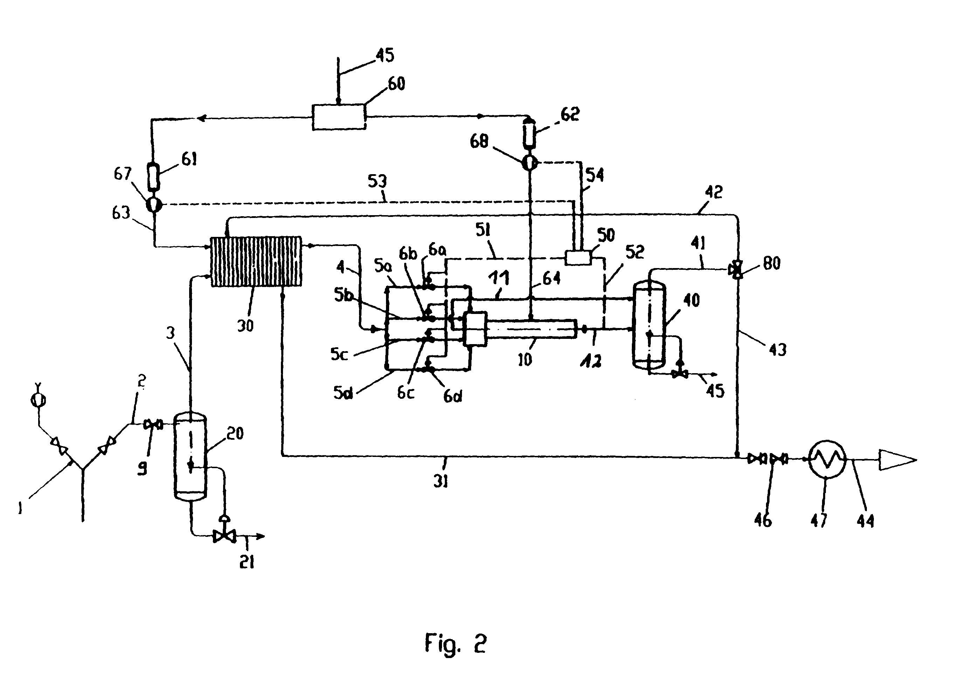

Eine Gesamtanlage zur Erdgastrocknung ist in der Fig. 2 schematisch dargestellt. Vom Erruptionskreuz 1 gelangt das feuchte Erdgas über den ersten Abschnitt 2 der Zuführleitung über ein Notaus-Ventil 9 in einen Freiwasserabscheider 20. Dort wird die bereits im feuchten Erdgas befindliche kondensierte Flüssigkeit, d.h. Wasser und Kohlenwasserstoffe, abgeschieden und über eine Kondensatleitung 21 abgeführt. Das auf diese Art und Weise vorgetrocknete feuchte Erdgas wird über den zweiten Abschnitt 3 der Zuführleitung einem Gas-Gaswärmetauscher 30 zugeführt und gelangt von dort über den dritten Abschnitt 4 in ein verzweigtes Leitungsnetz, das aus den Leitungen 5a bis 5d besteht, in denen entsprechende Absperrventile 6a bis 6d angeordnet sind. Diese Leitungen 5a bis 5d führen in das Wirbelrohr 10, wo das feuchte Erdgas tangential eingeführt wird, wie in Fig. 1 beschrieben worden ist. Vom Wirbelrohr 10 gehen die Warmgasablaßleitung 12 und die Kaltgasablaßleitung 11 ab, die beide zum Gasflüssigkeitsabscheider 40 führen. wo das mit Feuchtigkeit beladene Trockungsmittel sowie Kohlenwasserstoffe abgeschieden und über die Leitung 45 einer Trocknungsmittelregenerationseinrichtung 60 zugeführt werden.

Das getrocknete Erdgas kann über die Leitungen 41 und 43 sowie über das Dreiwegeventil 80 direkt einer Pipeline 44 zugeführt werden, wo ein Sicherheitsabsperrventil 46 sowie ein Wärmetauscher 47 angeordnet sind. Dies ist dann der Fall, wenn die Gastemperatur im Gasflüssigkeitsabscheider 40 zu tief wird. Zur Vorkühlung wird ein Teil des getrockneten Erdgases aus der Leitung 41 in die Leitung 42 umgeleitet und gelangt zu dem Gasgaswärmetauscher 30, von wo aus das Gas über die Leitung 31 der Pipeline 44 zugeführt wird.

Das Trocknungsmittel wird aus der Regenerationsanlage 60 den beiden Zuführeinrichtungen 61 und 62 zugeführt, die in den Leitungen 63 und 64 angeordnet sind. Die Leitung 63 mündet in den Gas-Gaswärmetauscher 30, während die Leitung 64 unmittelbar an das Wirbelrohr 10 angeschlossen ist. Die Steuerung der Gaszufuhr und der Trocknungsmittelzufuhr erfolgt über einen Rechner 50, der über die elektrischen Leitungen 53, 54 sowie 51, 52 an die Dosierpumpen 67, 68 die Ventile 6a-d sowie an eine Temperaturmeßeinrichtung in der Warmgasablaßleitung 11 angeschlossen ist.

Für Versuche wurde ein Wirbelrohr 10 verwendet, das auf einen maximalen Normvolumenstrom von 7.000 m³/h bei einem Eingangsdruck von 200 bar und einem Ausgangsdruck von 70 bar ausgelegt worden ist. Für die Trocknungsmittelzugabe im Wirbelrohr 10 wurde eine Kolbendosierpumpe 68 mit einem maximalen Volumenstrom von 280 1/h eingesetzt. Die erforderliche Dosiermenge konnte über die Hublänge und über die Frequenz des Motors eingestellt werden.

In einem ersten Versuch wurde mit einem Trocknungsmittel Triethylenglykol/Wasser in einem Mischungsverhältnis 90:10 gearbeitet. Hierbei wurde die Menge zwischen 37,1 kg/h und 6,2 kg/h variiert und der Einfluß auf den Wassergehalt sowie auch auf den Wassertaupunkt untersucht. Die Ergebnisse sind in der nachfolgenden Tabelle zusammengefaßt.

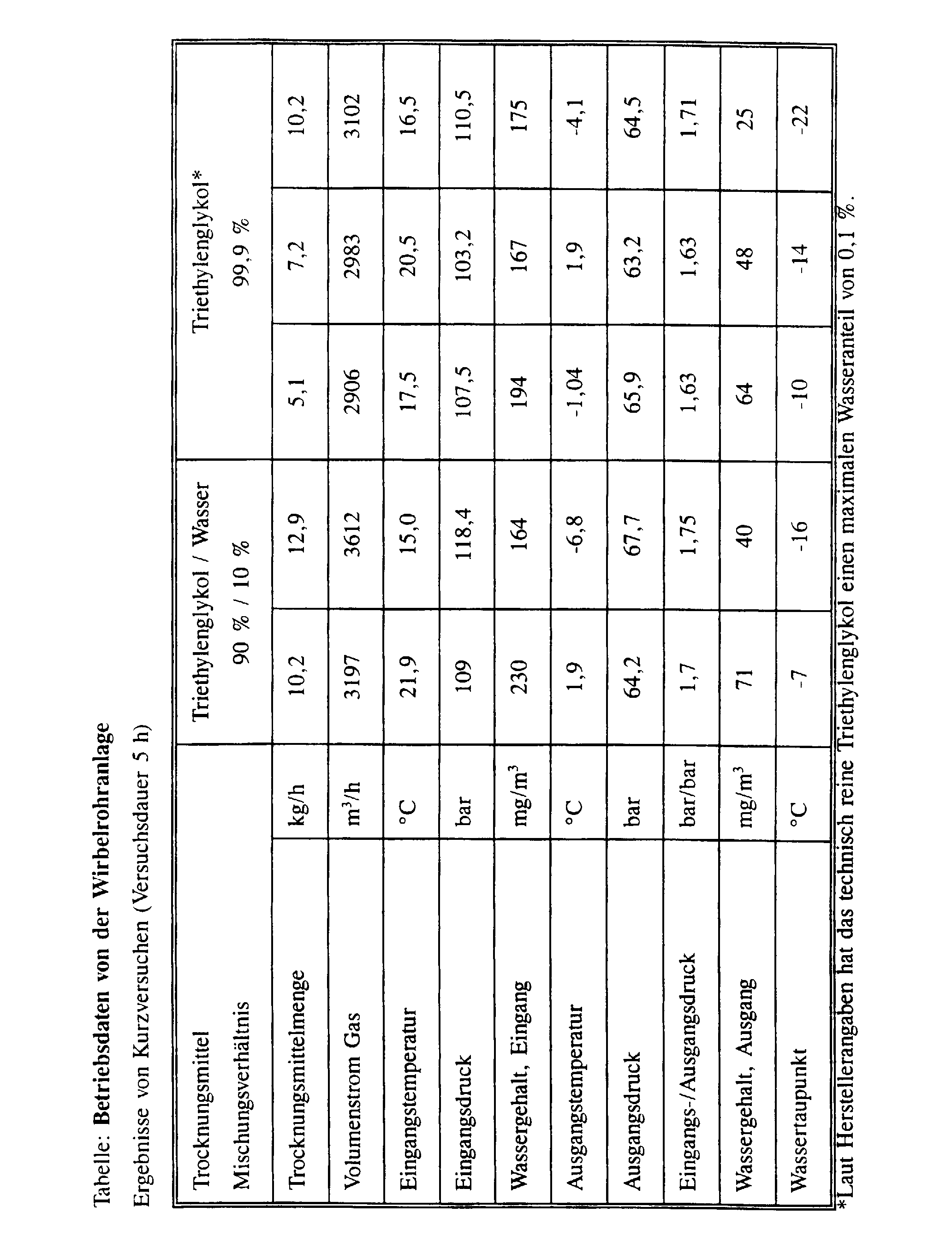

Unter den vorliegenden Bedingungen setzte sich das Wirbelrohr 10 bei einer Trockenmittelmenge von 6,2 kg/h mit Hydraten zu. Ab einer Eingabemenge von 10,2 kg/h arbeitete das Wirbelrohr störungsfrei, d.h. mit dem oben genannten Mischungsverhältnis ist bei der vorgefundenen konstruktiven Hilsch-Rohr-Lösung umgerechnet auf 1 m³ Erdgas eine Trocknungsmittelmenge von < 4 g erforderlich.

Bei einer gasseitigen Eingangstemperatur von 21,9°C in einem Druckverhältnis von 1,7 konnte meßtechnisch ein Rückgang des Wassergehaltes von 230 mg/m³ auf 71 mg/m³ nachgewiesen werden. Dies entspricht einem Wassertaupunkt von -7°C. Rein rechnerisch hätten sich dagegen bei den vorliegenden Druckbedingungen nach Joule-Thomson eine Gleichgewichtstemperatur von maximal +3,6°C eingestellt. Die deutlichen niedrigeren Wassertaupunkte treten an der Wirbelrohranlage aufgrund des Hilsch-Effektes und des überlagerten zusätzlichen Trocknungseffektes vom Trocknungsmittel auf. Durch ein Ansenken der Eingangstemperatur von 22°C auf 15°C, wie es sich prozeßtechnisch auch in einem vorgeschalteten Gas-Gaswärmetauscher gegebenenfalls ergeben würde, konnte die Wassertaupunktstemperatur um nahezu die gleiche Temperaturdifferenz abgesenkt werden. Es lag nunmehr ein Wassertaupunkt von -16°C vor.

Bei den Untersuchungen mit technisch reinem Triethylenglykol konnte nochmals die Menge abgesenkt werden. Für einen gasseitigen Volumenstrom von 2.900 m³/h reicht eine Trockenmittelmenge von 5,1 kg/h aus. Mit einer Eingangstemperatur von 17,5°C wurde ein Wassergehalt von 64 mg/m³, das einen Wassertaupunkt von -10°C entspricht, nachgewiesen. Durch eine Verdoppelung der Trocknungsmittelmenge fiel der Wassertaupunkt auf -22°C ab.

Zur Absicherung der während der Kurzzeitversuche ermittelten Daten wurde die Anlage über 14 Tage im Dauertest ohne regelungstechnische Eingriffe mit einer Trocknungsmittelmenge von 12 kg/h (92 % Triethylenglykol, 8 % Wasser) betrieben. Hierbei stellten sich keine anlagenspezifischen Störungen ein. Bei regelmäßigen Kontrollen des Wassertaupunktes wurden aufgrund veränderter Eingangsbedingungen Wassertaupunkte zwischen -6°C und -15°C ermittelt.

Die Tests erbrachten das Ergebnis einer hervorragenden Eignung des Wirbelrohres zur Erdgastrocknung. Ein Wassergehalt von < 70 mg/m³ kann mit einem Wirbelrohr bei Erdgaseintrittstemperatur von <20°C und einem Eingangs- zu Ausgangsdruckverhältnis von > 1,5 unter Zugabe des Trocknungsmittels erreicht werden. Damit auch bei kleineren Druckverhältnissen und höheren Temperaturen der oben genannte Wassergehalt eingehalten werden kann, sollte dem Wirbelrohr ein Gaswärmetauscher vorgeschaltet werden. Im Vergleich zu einer Absorberturmtrocknung werden mit einerm Wirbelrohr deutlich geringere Triethylenglykoleinsatzmengen benötigt. Die Untersuchungen lassen erwarten, daß sich die Einsatzmenge um 2/3 gegenüber einer Absorberturmtechnik reduzieren lassen. Dabei steigt bei gleichen Trocknungsbedigungen der spezifische Beladungszustand des Trocknungsmittels mit Wasser an. Als Folge sind aufgrund der geringeren Glykolmengen beim Einsatz dieser neuen Trocknungstechnik kleinere Regenerationseinrichtungen erforderlich.

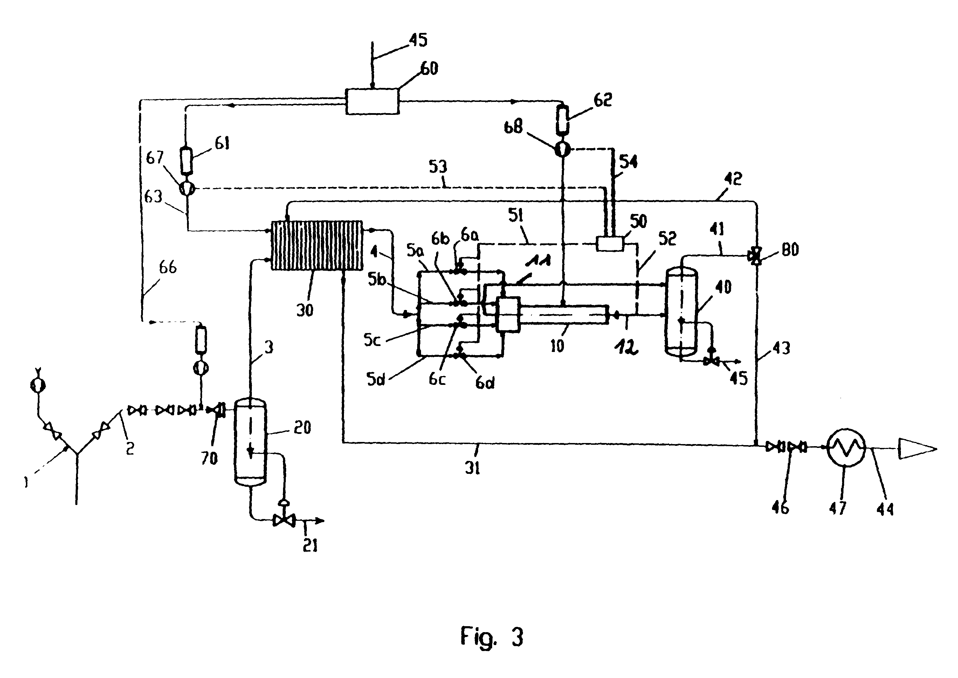

In der Fig. 3 ist eine weitere Ausführungsform dargestellt, die sich von der Fig. 2 dadurch unterscheidet, daß vor dem Freiwasserabscheider 20 ein Joule-Thomson-Ventil 70 angeordnet ist. Dadurch wird der Druck des feuchten Erdgases bereits vorzeitig reduziert, so daß das Wirbelrohr 10 nicht für hohe Drücke wie gemäß der Ausführungsform nach der Fig. 2 ausgelegt sein muß. Der Druck kann hier, wenn der Eingangsdruck des Erdgases bei 200 bar liegt, bereits auf 120 bar reduziert werden. Trocknungsmittel wird zusätzlich vor dem Joule-Thomson-Ventil 70 über die Zuführleitung 66 und die Zuführeinrichtung 65 mit der Dosierpumpe 69 zugeführt.

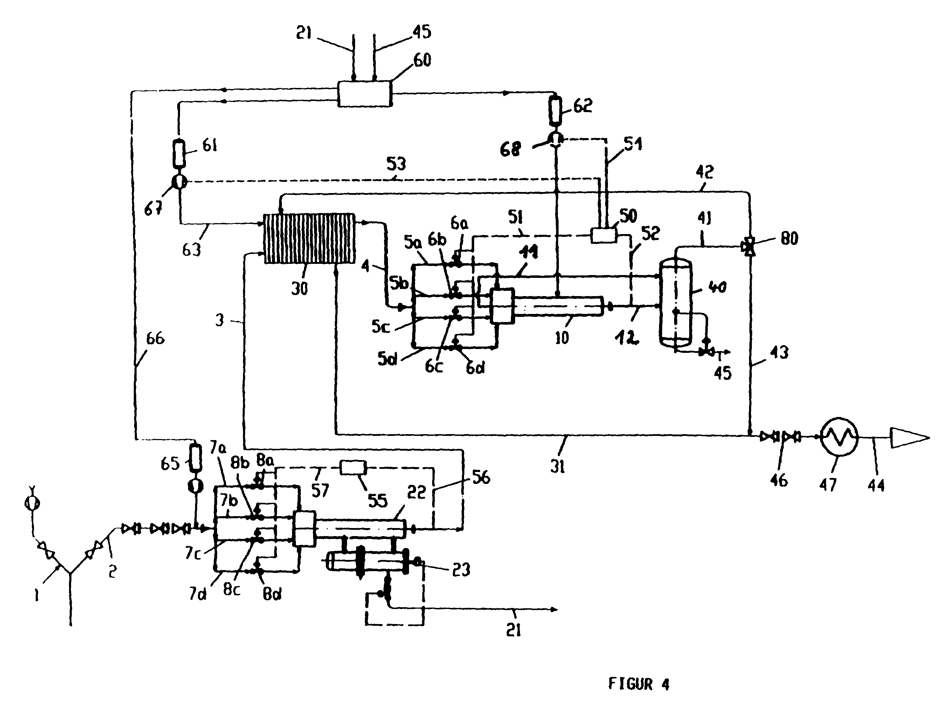

In der in Fig. 4 dargestellten Anlage ist anstelle des Joule-Thomson-Ventils 70 eine Vortisep-Anordnung vorgesehen, so daß hier bereits der Druck ebenfalls von 200 bar auf 120 bar reduziert werden kann. Man hat damit eine zweistufige Anordnung, wobei diese Vortisep-Anlage aus einem weiteren Wirbelrohr 22 mit einer Kondensatsammelkammer 23 besteht. Der erste Abschnitt 2 der Zuführleitung 66 verzweigt sich in die Leitungen 7a bis 7d, in denen Regelventile 8a bis 8d angeordnet sind, die über die elektrischen Leitungen 57 mit einem weiteren Rechner 55 verbunden sind. Das am Wirbelrohr 22 bereits abgeschiedene und in der Kondensatsammelkammer 23 aufgefangene Kondensat wird über die Leitung 21 abgeführt und der Regenerationseinrichtung 60 zugeführt. Trocknungsmittel kann zusätzlich bereits in die Leitung 2 über die Leitung 66 und die Zuführeinrichtung 65 zugeführt werden.

### Bezugszeichenliste

- 1: Erruptionskreuz
- 2: erster Abschnitt der Zuführleitung
- 3: zweiter Abschnitt der Zuführleitung
- 4: dritter Abschnitt der Zuführleitung
- 5: Einlaßleitung
- 5a bis 5d: Leitungen
- 6a bis 6d: Regelventile
- 7a bis 7d: Leitungen
- 8a bis 8d: Regelventile
- 9: Notausventil
- 10: Wirbelrohr
- 11: Kaltgasauslaßleitung
- 12: Warmgasauslaßleitung
- 13: Zylindermantel
- 14: Stellkegel
- 15: Gehäuse
- 16: Längswirbel
- 17: Kaltgasstrom
- 18: Flüssigkeitstropfen
- 19: Warmgasstrom
- 20: Freiwasserabscheider
- 21: Kondensatleitung
- 22: Wirbelrohr
- 23: Kondensatsammelkammer
- 30: Gas-Gaswärmetauscher
- 31: Leitung
- 40: Gasflüssigkeitsabscheider
- 41: Leitung
- 42: Rückführleitung
- 43: Verbindungsleitung
- 44: Pipeline
- 45: Kondensatrückführleitung
- 46: Sicherheitsabsperrventil
- 47: Wärmetauscher
- 50: Rechner
- 51: elektrische Leitung
- 52: elektrische Leitung
- 53: elektrische Leitung
- 54: elektrische Leitung
- 55: elektrische Leitung
- 56: elektrische Leitung
- 60: Trocknungsmittel-Regenerationseinrichtung
- 61: Zuführeinrichtung für Trocknungsmittel
- 62: Zuführeinrichtung für Trocknungsmittel
- 63: Leitung
- 64: Leitung
- 65: Zuführeinrichtung für Trocknungsmittel
- 66: Leitung
- 67: Dosierpumpe
- 68: Dosierpumpe
- 69: Dosierpumpe
- 70: Joule-Thomson-Ventil
- 80: Dreiwegeventil

## Patentansprüche

1. Verfahren zur Trocknung von feuchtem Gas, insbesondere Erdgas, bei dem das feuchte Gas einem Behandlungsvorgang unterzogen wird, in dem das feuchte Gas zunächst einer adiabatischen Expansion unterworfen und dann in einem rotationssymmetrischen Zentrifugalfeld mit Zentrifugalbeschleunigungen > 5000 g (g = Erdbeschleunigung) in eine turbulente Strömung versetzt wird, wobei sich aufgrund des Hilsch-Effektes ein Warmgas- und ein Kaltgasstrom bildet, die getrennt abgeführt werden, **dadurch gekennzeichnet,**
daß dem Gas vor und/oder während des Behandlungsvorgangs ein Trocknungsmittel zugesetzt wird und
daß das mit Flüssigkeit belastete Trocknungsmittel nach dem Behandlungsvorgang in einem weiteren Verfahrensschritt aus dem Kaltgas- und/oder Warmgasstrom abgeschieden wird.

2. Verfahren nach Anspruch 1, **dadurch gekennzeichnet,** daß als Trocknungsmittel Glykol, insbesondere Triethylenglykol, oder Methanol verwendet wird.

3. Verfahren nach Anspruch 1 oder 2, **dadurch gekennzeichnet,** daß ein Trocknungsmittel mit einem Reinheitsgrad von 85 bis 99 % verwendet wird.

4. Verfahren nach einem der Ansprüche 1 bis 3, **dadurch gekennzeichnet,** daß die Reinheit des Trocknungsmittels automatisch an das Druckverhältnis und/oder an die Eintrittstemperatur des Gases angepaßt wird.

5. Verfahren nach einem der Ansprüche 1 bis 4, **dadurch gekennzeichnet,** daß vor dem Behandlungsvorgang ein Trocknungsmittel zugegeben wird, das unreiner ist als das Trocknungsmittel, das während des Behandlungsvorgangs zugegeben wird.

6. Verfahren nach einem der Ansprüche 1 bis 5, **dadurch gekennzeichnet,** daß das Trocknungsmittel in einer Menge von < 4 g/m³ Gas zugegeben wird.

7. Verfahren nach einem der Ansprüche 1 bis 6, **dadurch gekennzeichnet,** daß der Druck P1 des zu trocknenden Gases während des Behandlungsvorganges auf einen Druck P2 reduziert wird, für den P1/P2 > 1,05 gilt.

8. Verfahren nach Anspruch 7, **dadurch gekennzeichnet,** daß das Druckverhältnis P1/P2 auf 1,3 bis 2,5 eingestellt wird.

9. Verfahren nach einem der Ansprüche 1 bis 8, **dadurch gekennzeichnet,** daß das feuchte Gas vor dem Behandlungsvorgang vorgekühlt wird.

10. Verfahren nach einem der Ansprüche 1 bis 9, **dadurch gekennzeichnet,** daß das Trocknungsmittel während der Vorkühlung zugegeben wird.

11. Verfahren nach einemd er Ansprüche 1 bis 10, **dadurch gekennzeichnet,** daß das getrocknete Gas erwärmt wird.

12. Verfahren nach einem der Ansprüche 1 bis 11, **dadurch gekennzeichnet,** daß der Druck des Gases vor dem Behandlungsvorgang reduziert wird.

13. Verfahren nach einem der Ansprüche 1 bis 12, **dadurch gekennzeichnet,** daß der Behandlungsvorgang zweimal nacheinander durchgeführt wird.

14. Verfahren nach einem der Ansprüche 1 bis 12, **dadurch gekennzeichnet**, daß ein Teil des getrockneten Gases zur Vorkühlung des feuchten Gases verwendet wird.

15. Vorrichtung zur Trocknung von feuchtem Gas, insbesondere Erdgas, mit einem Wirbelrohr zur Bildung eines Warmgas- und eines Kaltgasstromes, die getrennt abführbar sind, sowie mit Ventilen aufweisenden Gaszuführ- und -abführleitungen, **dadurch gekennzeichnet,**
daß das Wirbelrohr (10) längs seines Zylindermantels (13) geschlossen ist,
daß mindestens eine Einrichtung (61, 62, 65) für die Zuführung von Trocknungsmittel vorgesehen ist, die an die Zuführleitung (2, 3, 4) und/oder an den Wirbelraum des Wirbelrohres (10) angeschlossen ist und
daß die Kaltgas- und/oder die Warmgasauslaßleitung (11, 12) an einen Gas/Flüssigkeitsabscheider (40) für die Abtrennung angeschlossen ist.

16. Vorrichtung nach Anspruch 15, **dadurch gekennzeichnet,** daß dem Wirbelrohr (10) ein Wärmetauscher (30) zur Vorkühlung des feuchten Gases vorgeschaltet ist.

17. Vorrichtung nach einem der Ansprüche 15 oder 16, **dadurch gekennzeichnet,** daß der Wärmetauscher (30) an die Zuführeinrichtung (61) für Trocknungsmittel angeschlossen ist.

18. Vorrichtung nach einem der Ansprüche 15 bis 17, **dadurch gekennzeichnet,** daß dem Wirbelrohr (10) ein Freiwasserabscheider (20) vorgeschaltet ist.

19. Vorrichtung nach einem der Ansprüche 15 bis 18, **dadurch gekennzeichnet,** daß dem Wirbelrohr (10) ein Joule-Thomson-Ventil (70) vorgeschaltet ist.

20. Vorrichtung nach einem der Ansprüche 15 bis 19, **dadurch gekennzeichnet,** daß zwei Wirbelrohre (10, 22) hintereinander geschaltet sind.

21. Vorrichtung nach einem der Ansprüche 15 bis 20, **dadurch gekennzeichnet,** daß der Durchmesser des Wirbelrohres bei 0,025 m bis 0,3 m liegt.

22. Vorrichtung nach einem der Ansprüche 15 bis 21, **dadurch gekennzeichnet,** daß die Zuführleitung in der Mitte des Wirbelrohres an den Wirbelraum angeschlossen ist.

## Claims

1. Process for drying moist gas, especially natural gas, in which the moist gas is subjected to a treatment process in which the moist gas first undergoes an adiabatic expansion and is then set into a turbulent flow in a rotationally symmetrical centrifugal field with centrifugal accelerations > 5000 g (g = acceleration due to gravity), a warm gas stream and a cold gas stream being formed on the basis of the Hilsch effect and being led off separately, characterised in that a drying agent is added to the gas before and/or during the treatment process and in that the liquid-laden drying agent is separated from the cold gas and/or warm gas stream in a further procedural step after the treatment process.

2. Process according to claim 1, characterised in that the drying agent used is glycol, especially triethylene glycol, or methanol.

3. Process according to claim 1 or 2, characterised in that a drying agent having a degree of purity of from 85 to 99% is used.

4. Process according to any one of claims 1 to 3, characterised in that the purity of the drying agent is automatically adapted to the pressure ratio and/or the entry temperature of the gas.

5. Process according to any one of claims 1 to 4, characterised in that, before the treatment process, a drying agent is added which is less pure than the drying agent which is added during the treatment process.

6. Process according to any one of claims 1 to 5, characterised in that the drying agent is added in an amount of < 4 g/m³ of gas.

7. Process according to any one of claims 1 to 6, characterised in that the pressure P1 of the gas to be dried is reduced during the treatment process to a pressure P2 for which P1/P2 > 1.05 applies.

8. Process according to claim 7, characterised in that the pressure ratio P1/P2 is adjusted to 1.3 to 2.5.

9. Process according to any one of claims 1 to 8, characterised in that the moist gas is precooled prior to the treatment process.

10. Process according to any one of claims 1 to 9, characterised in that the drying agent is added during the precooling operation.

11. Process according to any one of claims 1 to 10, characterised in that the dried gas is heated.

12. Process according to any one of claims 1 to 11, characterised in that the pressure of the gas is reduced before the treatment process.

13. Process according to any one of claims 1 to 12, characterised in that the treatment process is carried out twice in succession.

14. Process according to any one of claims 1 to 12, characterised in that some of the dried gas is used for precooling the moist gas.

15. Apparatus for drying moist gas, especially natural gas, having a cyclone tube for forming a warm gas stream and a cold gas stream which can be led off separately, and having gas feed and outlet conduits having valves, characterised in that the cyclone tube (10) is closed along its cylinder jacket (13), in that at least one device (61, 62, 65) is provided for supplying drying agent and is connected to the feed conduit (2, 3, 4) and/or to the vortex space of the cyclone tube (10), and in that the cold gas and/or warm gas outlet conduit (11, 12) is connected to a gas-liquid separator (40) for separation.

16. Apparatus according to claim 15, characterised in that a heat exchanger (30) for precooling the moist gas is connected upstream of the cyclone tube (10).

17. Apparatus according to either claim 15 or claim 16, characterised in that the heat exchanger (30) is connected to the feed device (61) for drying agent.

18. Apparatus according to any one of claims 15 to 17, characterised in that a free water separator (20) is connected upstream of the cyclone tube (10).

19. Apparatus according to any one of claims 15 to 18, characterised in that a Joule-Thomson valve (70) is connected upstream of the cyclone tube (10).

20. Apparatus according to any one of claims 15 to 19, characterised in that two cyclone tubes (10, 22) are connected one behind the other.

21. Apparatus according to any one of claims 15 to 20, characterised in that the diameter of the cyclone tube is from 0.025 m to 0.3 m.

22. Apparatus according to any one of claims 15 to 21, characterised in that the feed conduit is connected, in the middle of the cyclone tube, to the vortex space.

## Revendications

1. Procédé de séchage de gaz humide, en particulier de gaz naturel, pour lequel le gaz humide est soumis à un processus de traitement, dans lequel le gaz humide est d'abord soumis à une expansion adiabatique, puis mis en écoulement turbulent dans un champ centrifuge répondant à une symétrie de rotation, avec des accélérations centrifuges > 5000 g (g = accélération terrestre), du fait de l'effet de Hilsch se constituant un flux de gaz chaud et un flux de gaz froid, évacués séparément, caractérisé en ce qu'un agent dessiccatif est ajouté au gaz avant ou pendant le processus de traitement, et
en ce que l'agent dessiccatif chargé en liquide est séparé du flux de gaz froid et/ou du flux de gaz chaud après le processus de traitement, lors d'une autre étape du procédé.

2. Procédé selon la revendication 1, caractérisé en ce qu'on utilise comme agent dessiccatif du glycol, en particulier du triéthylène-glycol, ou du méthanol.

3. Procédé selon la revendication 1 ou 2, caractérisé en ce qu'on utilise un agent dessiccatif d'un degré de pureté de 85 à 99 %.

4. Procédé selon l'une des revendications 1 à 3, caractérisé en ce que la pureté de l'agent dessiccatif est adaptée automatiquement au rapport de pression et/ou à la température d'entrée du gaz.

5. Procédé selon l'une des revendications 1 à 4, caractérisé en ce qu'avant le processus le traitement, on ajoute un agent dessiccatif plus impur que l'agent dessiccatif ajouté pendant le processus de traitement.

6. Procédé selon l'une des revendications 1 à 5, caractérisé en ce que l'agent dessiccatif est ajouté en une quantité < 4 g/m³ de gaz.

7. Procédé selon l'une des revendications 1 à 6, caractérisé en ce que la pression P1 du gaz à sécher est réduite pendant le processus de traitement à une pression P2 pour laquelle P1/P2 > 1,05.

8. Procédé selon la revendication 7, caractérisé en ce que le rapport de pression P1/P2 est réglé de 1,3 à 2,5.

9. Procédé selon l'une des revendications 1 à 8, caractérisé en ce que le gaz humide est pré-refroidi avant le processus de traitement.

10. Procédé selon l'une des revendications 1 à 9, caractérisé en ce que l'agent dessiccatif est ajouté pendant le pré-refroidissement.

11. Procédé selon l'une des revendications 1 à 10, caractérisé en ce que le gaz séché est chauffé.

12. Procédé selon l'une des revendications 1 à 11, caractérisé en ce que la pression du gaz est réduite avant le processus de traitement.

13. Procédé selon l'une des revendications 1 à 12, caractérisé en ce que le processus de traitement est effectué à deux reprises l'une après l'autre.

14. Procédé selon l'une des revendications 1 à 12, caractérisé en ce qu'une partie du gaz séché est utilisée pour le pré-refroidissement du gaz humide.

15. Dispositif de séchage de gaz humide, en particulier de gaz naturel, avec un tube à tourbillonnement pour former un flux de gaz chaud et un flux de gaz froid, susceptibles d'être évacués séparément, ainsi qu'avec des conduites d'amenée de gaz et d'évacuation de gaz présentant des soupapes, caractérisé en ce que
le tube à tourbillonnement (10) est fermé le long de son enveloppe de cylindre (13),
en ce qu'au moins un dispositif (61, 62, 65) pour l'amenée d'agent dessiccatif est prévu, raccordé à la conduite d'amenée (2, 3, 4) et/ou à l'espace de tourbillonnement du tube à tourbillonnement (10), et en ce que la conduite d'évacuation de gaz froid et/ou de gaz chaud (11, 12) est raccordée à un séparateur de gaz/liquide (40) pour effectuer la séparation.

16. Dispositif selon la revendication 15, caractérisé en ce qu'en amont du tube à tourbillonnement (10) est monté un échangeur de chaleur (30) pour effectuer le pré-refroidissement du gaz humide.

17. Dispositif selon l'une des revendications 15 ou 16, caractérisé en ce que l'échangeur de chaleur (30) est raccordé au dispositif d'amenée (61) pour l'agent dessiccatif.

18. Dispositif selon l'une des revendications 15 à 17, caractérisé en ce qu'un séparateur d'eau libre (20) est monté en amont du tube à tourbillonnement (10).

19. Dispositif selon l'une des revendications 15 à 18, caractérisé en ce qu'une soupape Joule-Thomson (70) est montée en amont du tube à tourbillonnement (10).

20. Dispositif selon l'une des revendications 15 à 19, caractérisé en ce que deux tubes à tourbillonnement (10, 22) sont branchés l'un derrière l'autre.

21. Dispositif selon l'une des revendications 15 à 20, caractérisé en ce que le diamètre du tube à tourbillonnement est de 0,025 m à 0,3 m.

22. Dispositif selon l'une des revendications 15 à 21, caractérisé en ce que la conduite d'amenée est raccordée à l'espace de tourbillonnement, au centre du tube à tourbillonnement.
